# EUROPÄISCHE PATENTSCHRIFT

(11) **EP 1 748 911 B1**
(45) Veröffentlichungstag und Bekanntmachung des Hinweises auf die Patenterteilung: **13.08.2008**
(21) Anmeldenummer: 05741834.5
(22) Anmeldetag: 17.05.2005
(51) Int. Cl.: B60R 19/16, B60R 19/38, B62D 21/15

(54) **ABWEISVORRICHTUNG BEI TEILÜBERDECKTER FRONTALKOLLISION FÜR KRAFTFAHRZEUGE**
DEFLECTOR DEVICE FOR PROTECTING MOTOR VEHICLES IN THE EVENT OF A PARTIALLY OVERLAPPING FRONTAL COLLISION
DISPOSITIF DEFLECTEUR POUR LA PROTECTION DE VEHICULES AUTOMOBILES EN CAS DE COLLISION FRONTALE A RECOUVREMENT PARTIEL

(30) Priorität: 17.05.2004 AT 3612004 U
(43) Veröffentlichungstag der Anmeldung: 07.02.2007
(73) Patentinhaber: Magna Steyr Fahrzeugtechnik AG & Co KG, 8041 Graz (AT)
(72) Erfinder: EICHBERGER, Arno, A-8061 St. Radegund (AT); HUBMANN, Franz, A-8401 Kalsdorf (AT); PERNKOPF, Friedrich, A-4040 Linz (AT); SCHIMPL, Wolfgang, A-8020 Graz (AT); WINKLER, Stephan, A-8010 Graz (AT)
(74) Vertreter: Harringer, Thomas
(86) Internationale Anmeldenummer: PCT/AT2005/000166
(87) Internationale Veröffentlichungsnummer: WO 2005/110815

(56) Entgegenhaltungen:
- DE-A1- 10 113 098
- US-A- 1 936 054
- US-A- 2 508 836
- US-A- 2 519 429
- US-A- 3 997 209
- US-A- 5 042 858
- PATENT ABSTRACTS OF JAPAN Bd. 009, Nr. 003 (M-349), 9. Januar 1985 (1985-01-09) & JP 59 153644 A (MAZDA KK), 1. September 1984 (1984-09-01)

## Beschreibung

Die Erfindung betrifft eine Abweisvorrichtung bei teilüberdeckter Frontalkollision für Kraftfahrzeuge, deren Vorderwagen einen linken und einen rechten Längsträger aufweist, welche vor einem Vorderrad angeordnet ist und das Vorderrad im Kollisionsfall schützt. Unter einer teilüberdeckten Frontalkollision ist eine Frontalkollision zu verstehen, bei der die kollidierenden Fahrzeuge sich mit im wesentlichen parallelen, aber seitlich gegeneinander versetzten Richtungsvektoren aufeinander zu bewegen. Die Kollisionszone ist somit nur ein seitlicher Teil des Vorderwagens.

Dieser seitliche Teil des Vorderwagens vor der Fahrgastzelle ist bei Fahrzeugen gewöhnlich weniger steif als der mittlere Teil vor der Fahrgastzelle und nimmt auch weniger Kollisionsenergie auf, sodass die Verformungen der Fahrgastzelle erheblich sind. Es besteht insbesondere die Gefahr, dass das jeweilige Rad in den Passagierraum eindringt. Darüber hinaus tritt bei solchen Kollisionen in der Regel noch ein besonders gefährliches Phänomen auf: Bereits bei relativ kleiner Überdeckung verhaken sich die kollisionsseitigen Vorderräder der beiden Fahrzeuge ineinander; ein Rad zumindest des einen Fahrzeuges kollidiert mit der Radaufhängung des anderen und vice versa. Dadurch wirken nicht nur besonders starke Längskräfte auf die Räder, die sie in den Passagierraum stoßen, sondern die beiden Fahrzeuge werden zumindest teilweise formschlüssig miteinander verbunden und so deren Vorbeigleiten aneinander verhindert. Zusätzlich wird den beiden ineinander verhakten Fahrzeuge noch gemeinsam ein Drall um die Hochachse erteilt.

Dieses Phänomen ist in der Literatur unter eben dem Namen "Verhaken" bekannt. Als Gegenmaßnahme ist es aus der DE 195 32 858 A1 bekannt, die vordere Stoßstange im Seitenbereich in Draufsicht stark gerundet und so steif auszubilden, dass diese eine Berührung der kollisionsseitigen Vorderräder verhindert und ein aneinander Abgleiten der beiden Fahrzeuge bewirkt. Man kann sich vorstellen, dass die Stoßstange bei den heute vorkommenden Kollisionsgeschwindigkeiten dazu nie stark genug sein kann. Außerdem hat die Stoßstange noch andere Sicherheitsanforderungen zu erfüllen, die dem zuwider laufen: Eine möglichst breite Kollisionsfläche bei ganz überdeckter Frontalkollision und dosiertes Nachgeben bei Kollision mit einem Fußgänger.

Aus der US 5,275,436 ist es weiters bekannt, vor und hinter den Vorderrädern etwa vertikale Ablenkbleche vorzusehen, die in der Horizontalen so ausgerichtet und gekrümmt sind, dass sie das Rad im Kollisionsfall positiv einwärts schwenken. Aber auch diese Ablenkbleche bauen sehr schwer, wenn sie diese Wirkung tatsächlich haben sollen, und erfordern ebenfalls eine besonders starke Stoßstange mit den oben erwähnten Nachteilen. Vor allem aber ist die Wirkung des vorderen Ablenkbleches aus kinematischen Gründen unzureichend: Wenn es in ausreichendem Abstand vor dem Rad angeordnet ist und nicht über die äussere vertikale Begrenzungsfläche des Rades hinausreicht, schwenkt sein äusseres Ende auf einem Kreisbogen einwärts. Es berührt dann das Rad innerhalb seiner äusseren vertikalen Begrenzungsfläche und kann es nicht mehr erfassen und einwärts schwenken. Eher zerstört es das Rad und die abweisende Wirkung tritt nicht ein.

Aus der US 2,519,429 sowie der gattungsbildenden US 2,508,836 sind alternative Schutzvorrichtungen bei Teilkollisionen bekannt.

Der Erfindung liegt die Aufgabe zugrunde, ein Umgreifen des betroffenen Vorderrades sicher herbeizuführen, um den von einem kollidierenden Fahrzeug geführten Stoss von dem betroffenen Vorderrad abzulenken, und das bei minimalem Bauaufwand.

Erfindungsgemäß wird das entsprechend den Merkmalen des Anspruchs 1 dadurch erreicht, dass die Abweisvorrichtung eine ungefähr in einer horizontalen Ebene liegende kinematische Kette bildet, deren Koppel ein Abweiser ist, der bei Einwirkung eines frontalen Stoßes rückwärts schwenkt und sich nach der Fahrzeugaussenseite hin verlagert. Durch die Verlagerung des Abweisers nach aussen umfasst und erfasst er das Rad sicher von aussen, ohne es zunächst zu zerstören. Bereits das hat eine positive Auswirkung auf das Schadensbild. Dabei kann als möglicher Nebeneffekt eine positive Radeindrehung auftreten. Wenn das Rad im weiteren Verlauf der Kollision zerstört wird, hat es seine Aufgabe - den Kollisionsgegner abzuweisen und Intrusionen zu verhindern - bereits erfüllt. Bemerkenswert ist, dass diese Wirkung ohne zusätzliche Maßnahmen, nur durch die Kollisionsenergie selbst, zuverlässig eintritt.

Die kinematische Kette kann in zwei kinematisch äquivalenten Ausführungsformen hergestellt werden. In der ersten, einfacheren, Ausführungsform ist die kinematische Kette ein Gelenkviereck, das aus zwei um mit dem Längsträger verbundene Lager schwenkbaren Schwingarmen und aus der mit den äusseren Enden der Schwingarme in Gelenkpunkten verbundenen Koppel besteht, welche Koppel über den fahrzeugäusseren Gelenkpunkt hinausreicht (Anspruch 2). Damit wird bei handlichen Dimensionen der Schwingarme und mit einfachen Gelenken die erwünschte Bahnkurve des Koppelpunktes - das ist der äusserste Punkt des Abweisers - gebildet.

In der zweiten Ausführungsform ist die kinematische Kette ein Schubkurbelgetriebe, das aus einem um mit dem Längsträger verbundenen Lager schwenkbaren Schwingarm, aus einem weiteren Lager, aus einer Schiebeführung und aus der mit dem äusseren Ende des Schwingarmes in einem Gelenkpunkt verbundenen und in dem weiteren Lager geführten Koppel besteht, welche Koppel über den fahrzeugäusseren Gelenkpunkt hinausreicht (Anspruch 3). Die Schiebeführung bietet unter anderem den Vorteil, dass sie mit enger Passung ausgeführt werden kann, sodass sie einer anfänglichen Verschiebung einen gewissen Widerstand entgegensetzt.

In einer Variante dieser Ausführungsform ist die Schiebeführung in dem weiteren Lager angeordnet (Anspruch 4). Es verschiebt sich also der gesamte Abweiser in dem weiteren mit dem Längsträger verbundenen Lager, welches auch drehbar sein muss. In einer bevorzugten Variante besteht der Abweiser aus zwei teleskopisch ineinander verschiebbaren Teilen, wobei der am Fahrzeug weiter innere Teil in dem weiteren Lager schwenkbar und der am Fahrzeug weiter äussere der beiden Teile in einem Gelenkpunkt mit dem einen Schwingarm verbunden ist, und ist die Schiebeführung zwischen den ineinander verschiebbaren Teilen vorgesehen (Anspruch 5).

Der Abweiser selbst ist ein ausreichend steif ausgebildeter Arm, der vorzugsweise in kollisionsfreier Stellung von dem Längsträger leicht rückwärts geneigt seitlich absteht und dessen äusseres Ende rückwärts gebogen ist (Anspruch 6). Die geneigte Ausrichtung ist kinematisch günstig, das gebogene Ende stellt sicher, dass das Rad auch tatsächlich ganz umgriffen wird.

Schließlich liegt es im Rahmen der Erfindung, für unterstützende Maßnahmen vorzusehen, dass an der Abweisvorrichtung ein Verbindungsmittel angreift, das auf die Spurstange der Lenkung des Kraftfahrzeuges einwirkt (Anspruch 7). Wenn auch normalerweise die Kollisionsenergie dank der erfindungsgemäßen Vorrichtung ausreicht, um ein Einschlagen des betroffenen Rades zu erzwingen, können fallweise derartige unterstützende Maßnahmen gesetzt werden.

Eine solche unterstützende Maßnahme wird dadurch ermöglicht, dass das Verbindungsmittel ein Seilzug ist, der die Spurstange im Sinne eines Einwärtslenkens des betroffenen Rades verschiebt (Anspruch 8); eine andere dadurch, dass das Verbindungsmittel zu einer Trennvorrichtung führt, die die Spurstange durchtrennt (Anspruch 9).

Eine weitere unterstützende Maßnahme besteht darin, dass an dem Abweiser eine Kraftquelle angreift, die im Kollisionsfall direkt oder indirekt auf den Abweiser eine auswärts gerichtete Kraft ausübt (Anspruch 10). Dadurch ist auch unter besonders ungünstigen Umständen ein Umgreifen des betroffenen Rades sichergestellt.

Schließlich ist in Weiterverfolgung des Erfindungsgedankens das weitere Lager am Längsträger hinter einer dessen vorderes Ende bildenden Deformationsdose (24) angebracht ist (Anspruch 11). Damit ist bei einer Kollision mit höherem Überdeckungsgrad und höherer Kollisionsgeschwindigkeit sichergestellt, dass der Abweiser nicht verschwenkt werden kann. In diesem Fall kann das betroffene Rad nicht einwärts schwenken und der Stoßpfad über das Rad zum Schweller wird nicht unterbrochen. Dadurch kann bei schweren Kollisionen mehr Stoßenergie aufgenommen werden.

Im folgenden wird die Erfindung anhand von Abbildungen beschrieben und erläutert. Es stellen dar:
- Fig. 1: Eine erste Ausführungsform der erfindungsgemäßen Vorrichtung in Ruhestellung,
- Fig. 2: wie Fig. 1, in einer Betriebsstellung,
- Fig. 3: wie Fig. 1, in einer weiteren Betriebsstellung,
- Fig. 4: eine Variante der ersten Ausführungsform in Ruhestellung,
- Fig. 5: wie Fig. 4, im Kollisionsfall,
- Fig. 6: eine zweite Ausführungsform der erfindungsgemäßen Vorrichtung in Ruhestellung,
- Fig. 7: wie Fig. 6, in einer Betriebsstellung,
- Fig. 8: wie Fig. 1, mit einer ersten zusätzlichen Vorrichtung,
- Fig. 9: wie Fig. 1, mit einer zweiten zusätzlichen Vorrichtung,
- Fig.10: wie Fig. 8, mit einer weiteren zusätzlichen Vorrichtung.

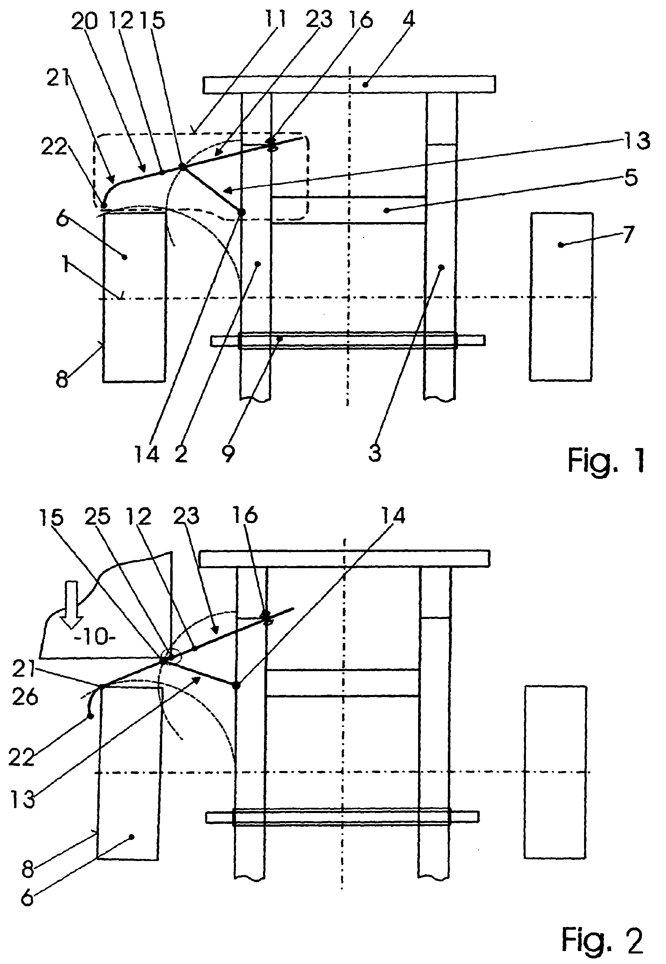

In **Fig. 1** ist der Vorderwagen eines Kraftfahrzeuges nur durch seine beiden Längsträger 2,3 einem Stoßstangenträger 4, einem Querträger 5 und die Mittellinie 1 der Vorderachse angedeutet. Im folgenden wird nur die linke Seite mit dem linken Vorderrad 6 und dem linken Längsträger 2 beschrieben; dasselbe trifft aber auch für die rechte Fahrzeugseite mit dem rechten Vorderrad 7 und dem rechten Längsträger 3 zu. Weiters ist noch das hinter der Vorderachse angeordnete Lenkgetriebe 9 einer Zahnstangenlenkung angedeutet.

Vor dem linken Vorderrad 6, dessen äußere vertikale Begrenzungsfläche mit 8 bezeichnet ist, befindet sich eine erfindungsgemäße Abweisvorrichtung 11, die als Gesamtheit in strichlierter Linie eingerahmt ist. Die Abweisvorrichtung 11 besteht aus einem Abweiser 12 und einem Schwingarm 13, die eine kinematische Kette, hier ein Schubkurbelgetriebe, bilden. Der Schwingarm 13 ist in einem mit dem Längsträger 2 verbundenen Lager 14 schwenkbar und greift in einem fahrzeugäußeren Gelenkpunkt 15 am Abweiser 12 an. Der Abweiser 12 seinerseits ist mit seinem fahrzeuginnerem Abschnitt 23 in einem mit dem Längsträger 2 verbundenen weiteren Lager 16 schwenkbar und verschiebbar geführt. Das weitere Lager 16 ist somit eine schwenkbare Schiebeführung für den Abweiser 12. Der Abweiser 12 ist ein ausreichend steif ausgebildeter Arm, dessen fahrzeuginnerer Abschnitt 23 in der beschriebenen Weise geführt ist und dessen fahrzeugäußerer Abschnitt 20 über den Gelenkpunkt 15 hinausragt und nach einer rückwärtsgerichteten Krümmung 21 in einem Punkt 22 endet. Die Bahnkurve dieses Punktes 22 verdankt der Erfindung vorteilhaften Verlauf nach hinten und nach aussen, wodurch der Abweiser 12 sicher an der äusseren vertikalen Begrenzungsfläche des Rades 6 angreift.

In Fig. befindet sich die Abweisvorrichtung in Ruhestellung, das heißt hier in normalen Betrieb ohne Kollision. **Fig. 2** zeigt die Vorrichtung in einem Stadium einer teilüberdeckten Frontalkollision. Der Kollisionsgegner 10 ist hier nur durch sein linkes vorderes Eck angedeutet. Er hat den Abweiser 12 erfaßt (Berührungspunkt 25) und hat ihn bereits so weit nach hinten geschwenkt, dass er das Rad 6 berührt. Es ist zu erkennen, dass sich der Abweiser 12 auch nach außen hin verschoben hat, sodass sein Endpunkt 22 außerhalb der äußeren vertikalen Begrenzungsfläche 8 des Rades 6 ist und seine gerundete Zone 21 das Rad 6 ganzflächig, zumindest aber in dem Punkt 26 berührt. Bei Vergleich mit der Stellung der Fig. 1 ist zu erkennen, dass der Abweiser nicht nur rückwärts geschwenkt, sondern auch nach außen verschoben wurde, sodass er das Rad 6 ganz umfasst. Dadurch kann das Rad des Kollisionsgegners 10 an dem Abweiser abgleiten, ohne sich in dem so geschützten Rad zu verhaken. Bei dieser Bewegung hat sich der fahrzeuginnere Abschnitt 23 des Abweisers 12 in dem weiteren Lager 16 zur Fahrzeugaussenseite verschoben.

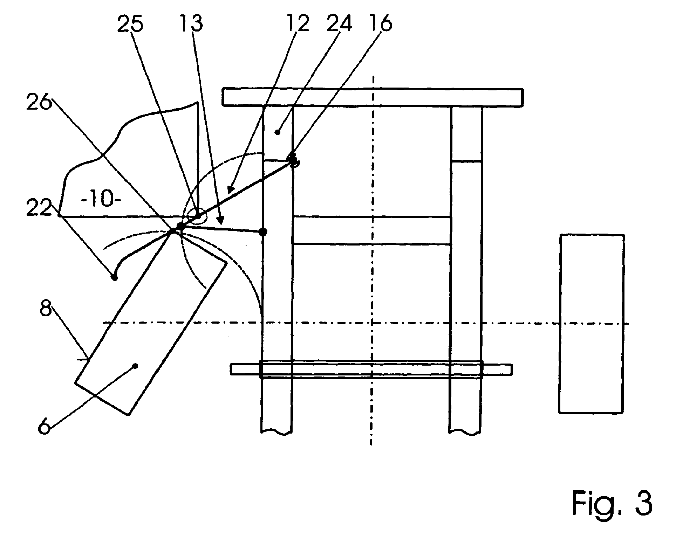

Im weiteren Verlauf der Kollision kann auch noch die Stellung **der** **Fig. 3** erreicht werden. Der Abweiser 12 wurde weiter nach hinten geschwenkt und weiter aus dem Lager 16 herausgezogen, wobei er das Rad 6 einwärts eingeschlagen hat. Dadurch bildet die äußere vertikale Begrenzungsfläche 8 des Rades 6 eine Abgleitfläche für den Kollisionsgegner, insbesondere für dessen linkes Vorderrad, sodass sich die Vorderräder der beiden Fahrzeuge nicht ineinander verhaken. In Fig. 3 ist auch zu erkennen, dass das Lager 16 am Längsträger (2) hinter einer dessen vorderes Ende bildenden Deformationsdose (24) (="Crashbox") angebracht ist. Bei einer teilüberdeckten Frontalkollision mit größerer Überdeckung, bei der bereits der Rahmenlängsträger deformiert wird (man spricht von einer 40:60 - Überdeckung), wird dadurch der erfindungsgemäße Effekt verhindert. Bei einer derartigen Kollision nämlich soll das betroffene Rad keineswegs einwärts geschwenkt werden, damit der Stoßkraftleitungspfad über das Rad zum hinter ihm beginnenden Schweller (das ist der Fahrzeuglängsträger unter der Tür) nicht unterbrochen ist. Da dieser Pfad bei schwachen Kollisionen, die die Deformationsdose (24) alleine aufnehmen kann, nicht benötigt wird, ist das Lager 16 hinter dieser angeordnet.

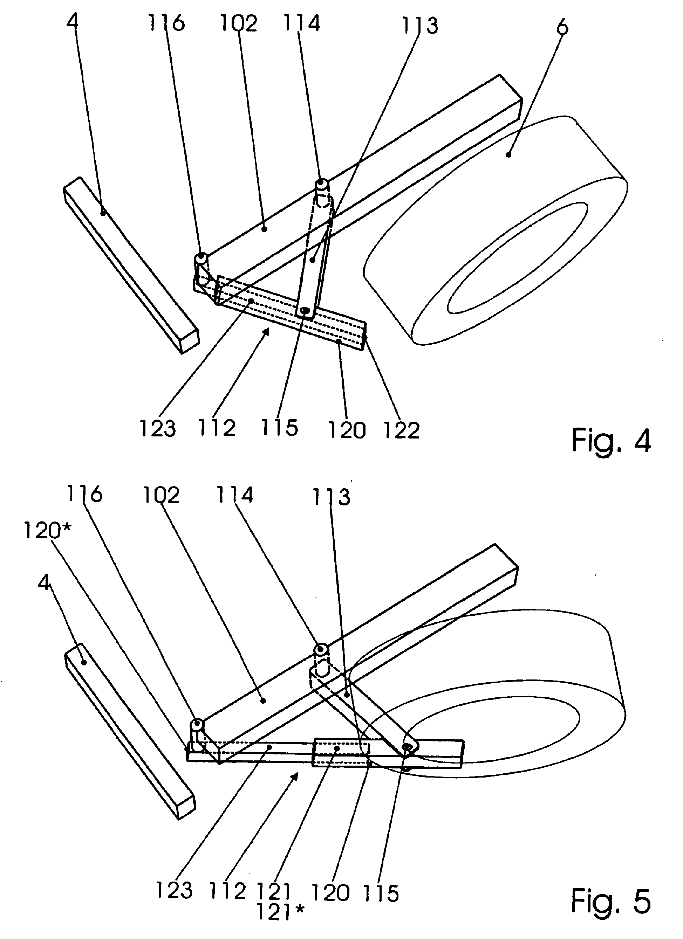

Die Variante der **Fig. 4** und der **Fig. 5** unterscheidet sich davon durch die andere Gestaltung des Abweisers und dessen Lagerung am Längsträger. Die Bezugszeichen entsprechender Teile sind hier um 100 erhöht. Der Abweiser 112 besteht hier aus zwei Teilen, einem fahrzeuginneren Teil 123 und einem fahrzeugäußeren Teil 120, welche als Schiebeführung 121 ineinander teleskopisch verschiebbar sind. Vorzugsweise ist der fahrzeuginnere Teil 123 im Inneren des fahrzeugäußeren Teiles 120 geführt. Letzterer ist in dem Gelenkpunkt 115 mit dem Schwingarm 113 verbunden, der seinerseits an einem Lager 114 am Längsträger 102 angelenkt ist. Der fahrzeuginnere Teil 123 ist in einem weiteren Lager 116 ebenfalls am Längsträger 102 angelenkt. Zwischen den beiden Teilen 120,123 des Abweisers kann auch eine (in der Fig. 5 nicht sichtbare) Kraftquelle vorgesehen sein, die die beiden Teile 120,123 im Kollisionsfall teleskopisch auseinander bewegt. Die der Energiezufuhr beziehungsweise der Zündung einer ein Gas erzeugenden Ladung ist angedeutet und mit 121* bezeichnet.

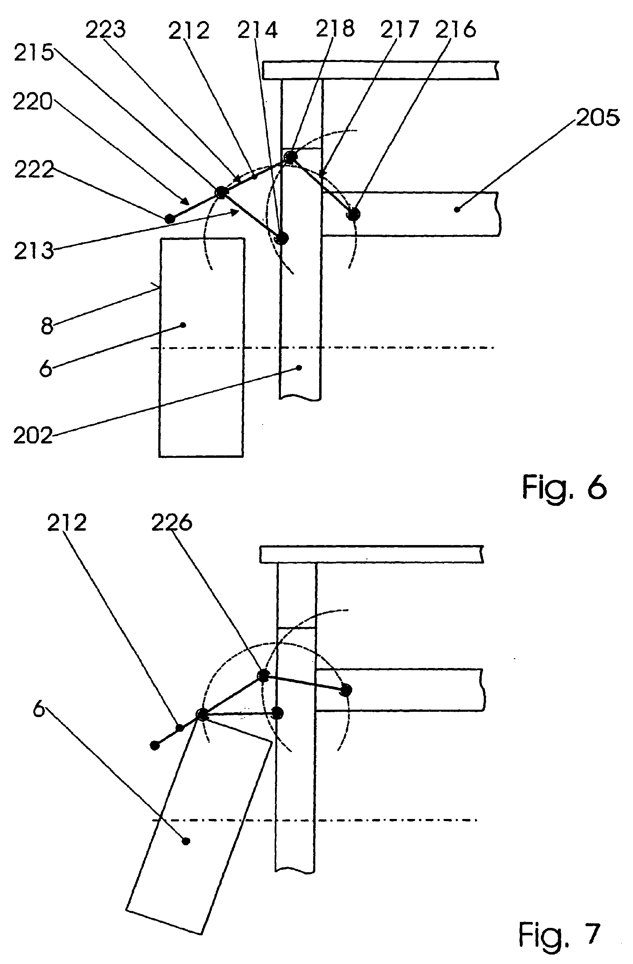

In der Ausführungsform der **Fig. 6** ist die kinematische Kette ein Gelenkviereck. Es besteht aus einem ersten Schwingarm 213, der um ein mit dem Längsträger 202 verbundenes Lager 214 schwenkbar ist, aus einem weiteren Schwingarm 217, der um ein mit dem Querträger 205 verbundenes weiteres Lager 216 schwenkbar ist, und aus einem die Koppel des Gelenkviereckes bildenden Abweiser 212. Der Abweiser 212 besteht wieder aus einem fahrzeuginneren Abschnitt 223 zwischen den beiden Gelenkpunkten 215, 218 und aus einem fahrzeugäußeren Abschnitt 220, der eine Verlängerung über den Gelenkpunkt 215 hinaus ist. Er endet in einem Punkt 222, dessen Bahnkurve im Laufe der Kollisionsbewegung wieder das Rad 6 an seiner äußeren vertikalen Begrenzungsfläche 8 umfassen wird.

In einem fortgeschrittenen Stadium einer teilüberdeckten Frontalkollision gelangt die Vorrichtung in die Stellung der **Fig. 7****.** Der Abweiser 212 hat das Rad 6 bereits in eine eingeschlagene Stellung gezwungen. Der Berührungspunkt 226 zwischen Rad 6 und Abweiser 212 ist eingezeichnet.

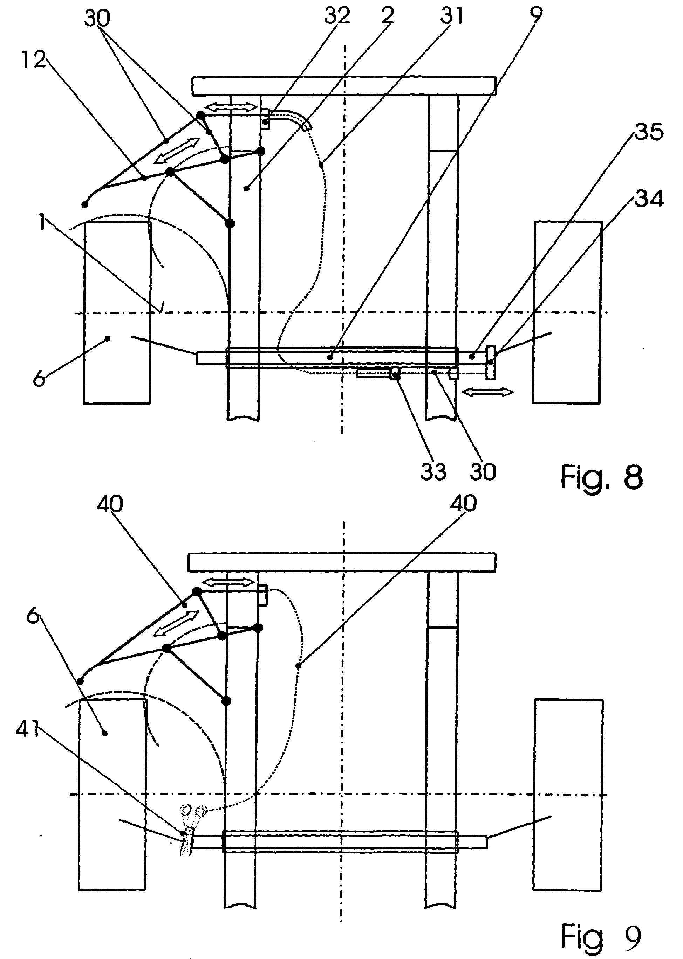

**Fig. 8** zeigt noch eine Zusatzvorrichtung. Sie besteht aus einem mit dem Abweiser 12 verbunden Ausleger 30, der über einen zwischen den Aufnahmen 32 und 33 vorgesehenen Bowdenzug 31 zum Lenkgetriebe 9 führt und an einer an der Spurstange 35 befestigten Lasche 34 angreift. Dadurch wird im Kollisonsfall bei hinter der Vorderachse 1 angeordneten Lenkgetriebe 9 die Spurstange so verschoben, dass sie das linke Rad 6 einwärts zu schwenken trachtet.

In **Fig. 9** ist schließlich eine weitere Zusatzvorrichtung angedeutet. Sie besteht aus einem Verbindungsmittel 40, das mechanisch, hydraulisch oder elektrisch sein kann und aus einer Trennvorrichtung 41, hier symbolisch als Schere dargestellt, die die Spurstange abtrennt, sodass diese einem einwärts Schwenken des Rades 6 keinen Widerstand mehr entgegensetzen kann. Die Trennvorrichtung kann sowohl mechanisch, als auch elektrisch oder pyrotechnisch wirken.

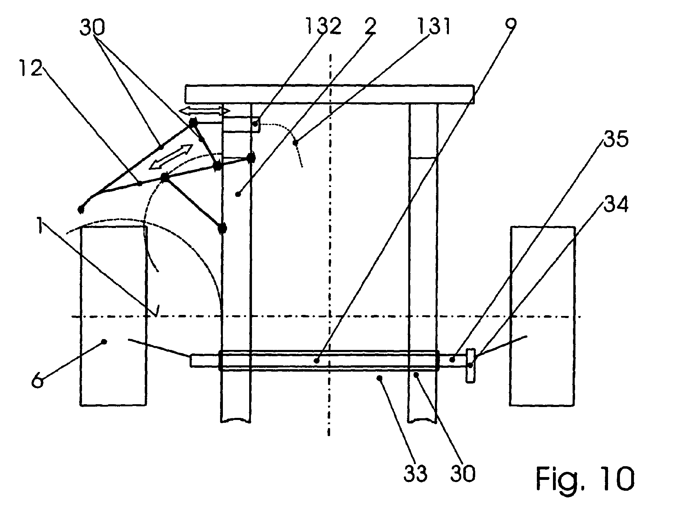

**Fig. 10** zeigt noch eine Variante zu Fig. 8. In dieser greift an dem Ausleger 30 eine am Rahmenträger 2 befestigte Kraftquelle 132 an, die den Ausleger 30 und mit ihm den Abweiser 12 im Kollisionsfall nach aussen verschiebt. Die der Energiezufuhr beziehungsweise der Zündung einer ein Gas erzeugenden Ladung ist angedeutet und mit 131 bezeichnet.

## Patentansprüche

1. Abweisvorrichtung (11) bei teilüberdeckter Frontalkollision für Kraftfahrzeuge, deren Vorderwagen einen linken und einen rechten Längsträger (2,3,102,202) aufweist, wobei die Abweisvorrichtung (11) vor einem Vorderrad (6) angeordnet ist und das Vorderrad (6,7) im Kollisionsfall schützt,
**dadurch gekennzeichnet, dass**
die Abweisvorrichtung (11) eine ungefähr in einer horizontalen Ebene liegende kinematische Kette bildet,
deren Koppel ein Abweiser (12,112,212,30) ist, wobei die Abweisvorrichtung (11) weiterhin einen schwenkbaren Schwingarm (13,113,213) aufweist, der einerseits mit dem jeweiligen Längsträger (2,3,102,202) über ein Lager (14,114,214) und andererseits mit dem Abweiser (12,112,212,30) über einen Gelenkpunkt (15,115,215) verbunden ist, wobei der Abweiser (12,112,212,30) bei Einwirkung eines frontalen Stoßes rückwärts schwenkt und sich nach der Fahrzeugaußenseite hin verlagert, so dass der Abweiser (12,112,212,30) an der äußeren vertikalen Begrenzungsfläche eines Vorderrades (6,7) angreift.

2. Abweisvorrichtung nach Anspruch 1, **dadurch gekennzeichnet, dass** die kinematische Kette ein Gelenkviereck ist, das aus zwei um mit dem Längsträger (2) verbundene Lager (214,216) schwenkbaren Schwingarmen (213,217) und aus der mit den äusseren Enden der Schwingarme (213,217) in Gelenkpunkten (215,218) verbundenen Koppel (212) besteht, welche Koppel über den fahrzeugäusseren Gelenkpunkt (215) hinausreicht.

3. Abweisvorrichtung nach Anspruch 1, **dadurch gekennzeichnet, dass** die kinematische Kette ein Schubkurbelgetriebe ist, das aus einem um mit dem Längsträger (2) verbundenen Lager (14;114) schwenkbaren Schwingarm (13; 113), aus einem weiteren Lager (16;116), aus einer Schiebeführung (16; 121) und aus der mit dem äusseren Ende des Schwingarmes in einem Gelenkpunkt (15;115) verbundenen und in dem weiteren Lager (16; 116) geführten Koppel (12;112) besteht, welche Koppel über den fahrzeugäusseren Gelenkpunkt (15; 115) hinausreicht.

4. Abweisvorrichtung nach Anspruch 3, **dadurch gekennzeichnet, dass** die Schiebeführung (16) in dem weiteren Lager (16) angeordnet ist.

5. Abweisvorrichtung nach Anspruch 3, **dadurch gekennzeichnet, dass** der Abweiser (112) aus zwei teleskopisch ineinander verschiebbaren Teilen (120, 123) besteht, wobei der innere der beiden Teile (123) in dem weiteren Lager (116) schwenkbar gelagert und der äussere der beiden Teile (120) in einem Gelenkpunkt (115) mit dem einen Schwingarm (113) verbunden ist, und dass die Schiebeführung (121) zwischen den ineinander verschiebbaren Teilen (120,123) vorgesehen ist.

6. Abweisvorrichtung nach Anspruch 1, **dadurch gekennzeichnet, dass** der Abweiser (12;112;212) in kollisionsfreier Stellung von dem Längsträger (2;102; 202) leicht rückwärts geneigt seitlich absteht und sein äusseres Ende (21) rückwärts gebogen ist.

7. Abweisvorrichtung nach Anspruch 1, **dadurch gekennzeichnet, dass** an dem Abweiser (12) ein Verbindungsmittel (30;40) angreift, das auf die Spurstange (35) der Lenkung (9) des Kraftfahrzeuges einwirkt.

8. Abweisvorrichtung nach Anspruch 7, **dadurch gekennzeichnet, dass** das Verbindungsmittel (30) ein Seilzug (31) ist, der die Spurstange(35) im Sinne eines Einwärtslenkens des betroffenen Rades (6) verschiebt.

9. Abweisvorrichtung nach Anspruch 7, **dadurch gekennzeichnet, dass** das Verbindungsmittel (40) zu einer Trennvorrichtung (41) führt, die die Spurstange (35) durchtrennt.

10. Abweisvorrichtung nach Anspruch 1, **dadurch gekennzeichnet, dass** an dem Abweiser (12;112) eine Kraftquelle (121*;132) angreift, die im Kollisionsfall auf den Abweiser (12;112) oder einen Teil (120) dessen eine auswärts gerichtete Kraft ausübt.

11. Abweisvorrichtung nach Anspruch 3, **dadurch gekennzeichnet, dass** das weitere Lager (16;116) am Längsträger (2) hinter einer dessen vorderes Ende bildenden Deformationsdose (24) angebracht ist.

## Claims

1. Deflecting device (11) for an offset frontal collision for motor vehicles, the front end of which has a left and a right longitudinal member (2, 3, 102, 202), the deflecting device (11) being arranged in front of a front wheel (6) and protecting the front wheel in the event of a collision, **characterized in that** the deflecting device (11) forms a kinematic chain which is situated approximately in a horizontal plane and the coupling link of which is a deflector (12, 112, 212, 30), the deflecting device (11) furthermore having a pivotable swinging arm (13, 113, 213) which is connected at one end to the respective longitudinal member (2, 3, 102, 202) via a bearing (14, 114, 214) and at the other end to the deflector (12, 112, 212, 30) via pivot point (15, 115, 215), the deflector (12, 112, 212, 30), under the action of 18 frontal impact, pivoting rearward and being displaced toward the outside of the vehicle such that the deflector (12, 112, 212, 30) acts on the outer vertical boundary surface of a front wheel (6, 7).

2. Deflecting device according to Claim 1, **characterized in that** the kinematic chain is a four-bar linkage which comprises two swinging arms (213, 217) which are pivotable about bearings (214, 216) connected to the longitudinal member (2) and the coupling link (212) which is connected to the outer ends of the swinging arms (213, 217) at pivot points (215, 218) and reaches beyond the outer pivot point (215) of the vehicle.

3. Deflecting device according to Claim 1, **characterized in that** the kinematic chain is a slider crank mechanism which comprises a swinging arm (13; 113) which is pivotable about bearings (14; 114) connected to the longitudinal member (2), a further bearing (16; 116), a sliding guide (16; 121) and the coupling link (12; 112) which is connected to the outer end of the swinging arm at a pivot point (15; 115) and is guided in the further bearing (16; 116) and reaches beyond the outer pivot point (15; 115) of the vehicle.

4. Deflecting device according to Claim 3, **characterized in that** the sliding guide (16) is arranged in the further bearing (16).

5. Deflecting device according to Claim 3, **characterized in that** the deflector (112) comprises two parts (120, 123) which are displaceable telescopically one inside the other, the inner of the two parts (123) being mounted pivotably in the further bearing (116) and the outer of the two parts (120) being connected to the one swinging arm (113) at a pivot point (115), and **in that** the sliding guide (121) is provided between the parts (120, 123) which are displaceable one inside the other.

6. Deflecting device according to Claim 1, **characterized in that** the deflector (12; 112; 212), in a collision-free position, protrudes laterally in a manner inclined slightly rearward from the longitudinal member (2; 102; 202) and its outer end (21) is bent rearward.

7. Deflecting device according to Claim 1, **characterized in that** a connecting means (30; 40) which acts on the tie rod (35) of the steering system (9) of the motor vehicle acts on the deflector (12).

8. Deflecting device according to Claim 7, **characterized in that** the connecting means (30) is a cable pull (31) which displaces the tie rod (35) with the effect of steering the wheel (6) concerned inward.

9. Deflecting device according to Claim 7, **characterized in that** the connecting means (40) leads to a separating device (41) which severs the tie rod (35).

10. Deflecting device according to Claim 1, **characterized in that** a force source (121*; 132) which, in the event of a collision, exerts an outwardly directed force on the deflector (12; 112) or a part (120) thereof acts on the deflector (12; 112).

11. Deflecting device according to Claim 3, **characterised in that** the further bearing (16; 116) is fitted on the longitudinal member (2) behind a crashbox (24) forming the front end thereof.

## Revendications

1. Dispositif déflecteur (11) pour la protection de véhicules automobiles en cas de collision frontale à recouvrement partiel, dont l'avant de véhicule comprend un longeron gauche et un longeron droit (2, 3, 102, 202), dans lequel le dispositif déflecteur (11) est disposé devant une roue avant (6) et protège la roue avant (6, 7) en cas de collision, **caractérisé en ce que** le dispositif déflecteur (11) forme une chaîne cinématique située sensiblement dans un plan horizontal, dont la bielle est un déflecteur (12, 112, 212, 30), dans lequel le dispositif déflecteur (11) comprend en outre un bras oscillant pivotant (13, 113, 213) qui est relié d'une part au longeron respectif (2, 3, 102, 202) au moyen d'un palier (14, 114, 214) et d'autre part au déflecteur (12, 112, 212, 30) au moyen d'un point d'articulation (15, 115, 215), dans lequel le déflecteur (12, 112, 212, 30) pivote vers l'arrière en cas de choc et se déplace vers le côté extérieur du véhicula, de telle manière que le déflecteur (12, 112, 212, 30) s'accroche à la face de limitation verticale extérieure d'une roue avant (6, 7).

2. Dispositif déflecteur selon la revendication 1, **caractérisé en ce que** la chaîne cinématique est un quadrilatère articulé, qui se compose de deux bras oscillants (213, 217) pivotant autour de paliers (214, 216) fixés au longeron (2) et de la bielle (212) reliée aux extrémités extérieures des bras oscillants (213, 217) en des points d'articulation (215, 218), ladite bielle (212) se prolongeant au-delà du point d'articulation extérieur du véhicule (215).

3. Dispositif déflecteur selon la revendication 1, **caractérisé en ce que** la chaîne cinématique est un mécanisme à bielle-manivelle, qui se compose d'un bras oscillant (13; 113) pivotant autour d'un palier (14; 114) fixé au longeron (2), d'un autre palier (16; 116), d'un guide de glissement (16; 121) et de la bielle (12; 112) reliée à l'extrémité extérieure du bras oscillant en un point d'articulation (15; 115) et guidée dans l'autre palier (16; 116), ladite bielle se prolongeant au-delà du point d'articulation extérieur du véhicule (15; 115).

4. Dispositif déflecteur selon la revendication 3, **caractérisé en ce que** le guide de glissement. (16) est disposé dans l'autre palier (16).

5. Dispositif déflecteur selon la revendication 3, **caractérisé en ce que** le déflecteur (12) se compose de deux pièces (120, 123) télescopiques coulissant l'une dans l'autre, dans lequel la pièce Intérieure (123) des deux pièces est supportée de façon pivotante dans l'autre palier (116) et la pièce extérieure (120) des deux pièces est reliée à un bras oscillant (113) en un point d'articulation (115), et **en ce que** le guide de glissement (121) est prévu entre les pièces pouvant coulisser l'une dans l'autre (120, 123).

6. Dispositif déflecteur selon la revendication 1, **caractérisé en ce qu'**en l'absence de collision, le déflecteur (12; 112; 212) est saillant latéralement sur le longeron (2; 102; 202), avec une légère inclinaison vers l'arrière, et son extrémité extérieure (21) est recourbée vers l'arrière.

7. Dispositif déflecteur selon la revendication 1, **caractérisé en ce que** le déflecteur (12) est relié à un moyen de liaison (30; 40), qui agit sur la barre d'accouplement (35) de la direction (9) du véhicule.

8. Dispositif déflecteur selon la revendication 7, **caractérisé en ce que** le moyen de liaison (30) est un tirant à câble (31), qui déplace la barre d'accouplement (35) dans le sens d'un pivotement vers l'intérieur de la roue concernée (6).

9. Dispositif déflecteur selon la a revendication 7, **caractérisé en ce que** le moyen de liaison (40) conduit un dispositif de séparation (41), qui coupe la barre d'accouplement (35).

10. Dispositif déflecteur selon la revendication 1, **caractérisé en ce que** le déflecteur (12; 112) est relié à une source de force (121*; 132) qui, en cas de collision, exerce une force dirigée vers l'extérieur sur le déflecteur (12; 112) ou une partie (120) de celui-ci.

11. Dispositif déflecteur selon la revendication 3, **caractérisé en ce que** l'autre palier (16; 116) est placé sur le longeron (2), derrière une boite de déformation (24) formant l'extrémité avant de celui-ci.
